# EUROPÄISCHE PATENTSCHRIFT

(11) **EP 2 393 700 B1**
(45) Veröffentlichungstag und Bekanntmachung des Hinweises auf die Patenterteilung: **01.07.2015**
(21) Anmeldenummer: 10726871.6
(22) Anmeldetag: 04.02.2010
(51) Int. Cl.: B62B 3/14, B62B 5/06, G02B 25/00

(54) **EINKAUFSWAGEN MIT EINEM HALTETEIL FÜR EIN ZUSATZELEMENT**
SHOPPING CART COMPRISING A HOLDING DEVICE FOR AN ADDITIONAL COMPONENT
CHARIOT MUNI D'UN DISPOSITIF DE MAINTIEN POUR UNE PIÈCE SUPPLÉMENTAIRE

(30) Priorität: 04.02.2009 DE 202009001362 U; 21.10.2009 DE 202009014266 U
(43) Veröffentlichungstag der Anmeldung: 14.12.2011
(73) Patentinhaber: Wieth, Franz, 82178 Puchheim (DE); Sonnendorfer, Horst, 82178 Puchheim (DE)
(72) Erfinder: Wieth, Franz, 82178 Puchheim (DE); Sonnendorfer, Horst, 82178 Puchheim (DE)
(74) Vertreter: Braun-Dullaeus, Karl-Ulrich
(86) Internationale Anmeldenummer: PCT/DE2010/000128
(87) Internationale Veröffentlichungsnummer: WO 2010/099772

(56) Entgegenhaltungen:
- WO-A1-02/25346
- DE-A1-102004 042 433
- DE-U1- 20 011 735
- DE-U1-202005 006 627
- GB-A- 2 393 526

## Beschreibung

### Technisches Gebiet

Die Erfindung betrifft einen Schiebegriff für Einkaufswagen, der eine Lupe aufweist, mit deren Hilfe der Kunde eines Supermarktes Angaben auf der Verpackung einer Ware leichter lesen kann.

### Stand der Technik

Ein derartiger Schiebegriff ist aus der DE 202005006627 U1 bekannt. Dort ist eine Lupe offenbart, die am Handgriff fest und nicht herausnehmbar befestigt ist.

Dies hat den Nachteil, dass die Benutzung ergonometrisch unbequem ist, da die zu betrachenden Waren unter die Griffstange gehalten werden müssen. Dort befindet sich auch die Korbklappe und zum Betrachten von größeren Produktpackungen ist nicht genug Platz vorhanden.

Aus der DE102004042433A1 ist eine am Einkaufswagen befestigte Lupe bekannt, welche über ein selbstaufrollendes Seil aus einer Halterung herausziehbar mit dem Einkaufswagen verbunden ist. Dies erlaubt es auch größere Produktverpackungen zu betrachten, aber nachteilig ist bei dieser Lösung, dass der Benutzer nur noch eine Hand frei hat. Ein weiterer Nachteil liegt darin, dass die Lupe zu jeder Zeit herausgezogen werden kann und die Lupe nicht sonderlich geschützt ist, wenn der Einkaufswagen in einer Sammelgarage für Einkaufswagen abgestellt ist.

Das GB 2393 526 A zeigt eine über eine Griffklemme am Griff eines Einkaufswagens befestigbare Lupe. Die Griffklemme und die Lupe sind über einen Schwanenhals verbunden, so dass die Position der Lupe verändert werden kann

### Offenbarung der Erfindung

### Technische Aufgabe

Es ist Aufgabe der Erfindung eine Lupe für einen Einkaufswagen zu schaffen, welche eine ergonomisch bequeme Benutzung ermöglicht und wobei die Lupe geschützt ist, wenn der Einkaufswagen in einer Sammelgarage abgestellt ist.

### Technische Lösung

Die Lösung dieser Aufgabe erfolgt durch einen Einkaufswagen gemäß Anspruch 1.

Die Überlegungen, die zum Entstehen der vorliegenden Erfindung führten, gingen davon aus, dass die Lupe nur während des Gebrauchs des Einkaufswagens benötigt wird und die übrige Zeit geschützt aufbewahrt werden kann.

Die gestellte Aufgabe wird anhand der Überlegungen gelöst, dass die Lupe am Einkaufswagen über einen Schwenkmechanismus am Schiebegriff des Einkaufswagens oder über einen Schwenkmechanismus an einem dem Einkaufswagen zugeordneten Pfandschloss befestigt ist, wobei
- die Lupe eine Ruhestellung einnehmen kann, in welcher sie geschützt am Schiebegriff des Einkaufswagens oder am Gehäuse des Pfandschlosses anliegt und
- eine Leseposition einnehmen kann, in welcher sie sich vom Schiebegriff oder vom Gehäuse des Pfandschlosses entfernt befindet und in welcher eine bequeme Durchsicht möglich ist.

Weitergehende Überlegungen führten zu der Erkenntnis, dass die Lupe dann die Ruhestellung einnimmt, wenn der Einkaufswagen in einen anderen Einkaufswagen eingeschoben ist. Diese Überlegungen führten dann zu der weiteren Erkenntnis, dass die Lupe zuerst die Ruhestellung eingenommen haben muss bevor die Pfandmünze entnommen werden kann und anschließend die Lupe von einem im Pfandschloss steckenden Schlüssel in der Ruhestellung fixiert wird.

### Vorteilhafte Wirkungen

Hierdurch wird vorteilhaft bewirkt, dass die Lupe immer dann, wenn der Einkaufswagen in einer Sammelstelle abgestellt ist in der Ruheposition ist. Diese Ruheposition ist eine Position, in welcher die Lupe besser vor schädlichen Einwirkungen geschützt ist als in der Leseposition.

Hierdurch ist es möglich als Leseposition eine Position zu wählen, die weit entfernt vom Schiebegriff oder Münzschloss liegt und somit der Benutzer bequem auch eine größere Produktverpackung betrachten kann ohne mit dem Schiebegriff oder der Korbklappe in Berührung zu kommen.

Nachfolgend werden zwei Ausführungsbeispiele der Erfindung anhand von Figuren näher erläutert. Es zeigen jeweils in geschnittener Darstellung:
- Fig. 1: ein erstes Beispiel der Lupe in Ruheposition,
- Fig. 2: ein erstes Beispiel der Lupe in Leseposition.
- Fig. 3: ein zweites Beispiel der Lupe in Ruheposition,
- Fig. 4: ein zweites Beispiel der Lupe in Leseposition.

Auf einem Griff 1 ist ein Pfandschloss 2 montiert. Die Lupe 3 ist in einem Halteteil 4 integriert. Das Halteteil 4 ist über ein Lager 5 drehbar mit dem Pfandschloss 2 verbunden.

In der gezeichneten Ausführungsform befindet sich das Lager 5 an einem Klemmteil 6. Dieses Klemmteil 6 wird verwendet um das Pfandschloss 2 am Griff 1 zu befestigen. Da das Klemmteil 6 ein vom übrigen Pfandschloss 2 unabhängiges Teil ist, bringt diese Lösung den Vorteil, dass ein vorhandenes Pfandschloss schnell und kostengünstig mit einer Lupe nachgerüstet werden kann, indem einzig das vorhandene Klemmteil gegen das neue erfindungsgemäße Klemmteil ausgetauscht wird.

Ebenso ist es natürlich möglich bereits bei der Erstmontage eines Pfandschlosses dieses mit einer Lupe zu montieren.

Auch ist es eine gemäß dem Erfindungsgedanken realisierbare Lösung, wenn sich das Lager für das Halteteil am Hauptgehäuse des Pfandschlosses befindet.

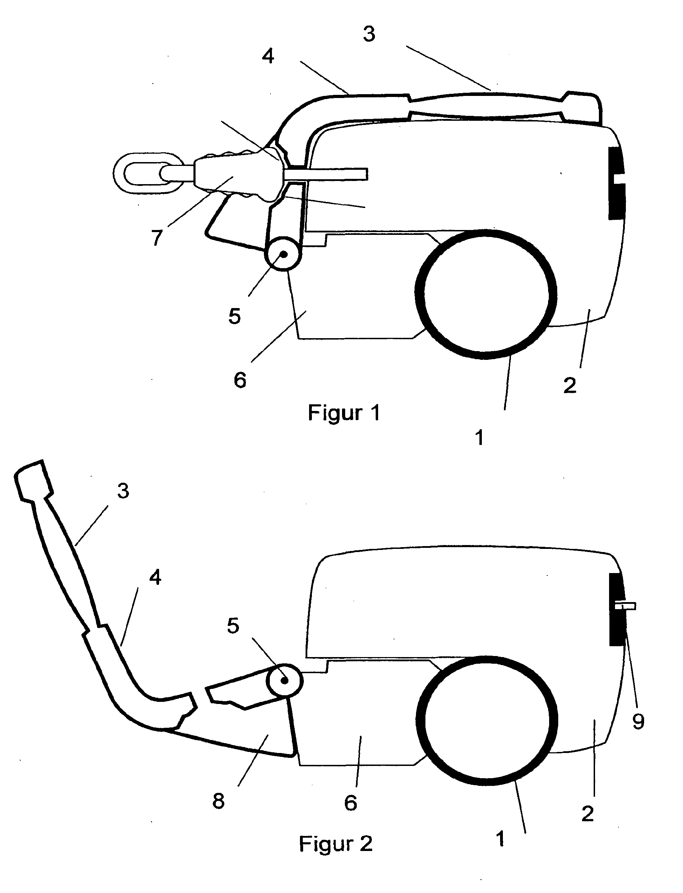

In der Figur 1 ist ein Schlüssel 7 zu sehen, der in das Pfandschloss 2 eingeschoben ist und von der Haltemechanik im Inneren des Pfandschlosses 2 gehalten wird.

Aus gründen der Übersichtlichkeit wurde auf die Darstellung der Haltemechanik verzichtet, da diese dem Fachmann ohnehin bekannt ist.

Der Schlüssel 7 hat einem SchlüsselgrifF 7a, dessen zum Pfandschloss 2 gerichtete Seite an eine Anlagefläche 4a des Halteteils 4 drückt.

Aufgrund der kinematischen Verhältnisse ist nun das Halteteil 4 über das Lager 5 und den gegen die Anlagefläche 4a drückenden Schlüsselgriff 7a fixiert.

Die Lupe 3 liegt auf der Oberseite des Pfandschlosses 2 auf.

Die Konstruktion kann auch so gestaltet sein, dass der Schlüsselgriff 7a entsprechend fest gegen die Anlagefläche 4a drückt und das Halteteil 4 elastisch verformt wird, wodurch es dann unter Vorspannung auf der Oberseite des Pfandschlosses 2 aufliegt.

Ebenso kann die Oberseite des Pfandschlosses 2 auch eine in der Zeichnung nicht dargestellte aber für dem Fachmann vorstellbare Vertiefung aufweisen, in welcher das Halteteil 4 und die Lupe 3 dann geschützt untergebracht sind.

Diese geschützte und versenkte Unterbringung erhöht die Widerstandsfähigkeit der Konstruktion gegen Vandalismus, da sie eine verringerte Angriffsfläche bietet.

Das Bild 2 zeigt die Lupe 2 in der Leseposition. Durch das Einschieben eines Pfandelementes 9 wurde der Schlüssel 7 freigegeben. Als Pfandelement kommt eine Münze 8 oder eine Kundenkarte in Betracht.

Damit ist auch das Halteteil 4 freigegeben worden und ist nun um das Lager 5 soweit geschwenkt worden, bis die Abstützung 8 am Klemmteil 6 anliegt.

Die Lupe 3 hat nun eine leicht schräge Position, die es dem Benutzer bequem erlaubt durch die Lupe 3 hindurch Produktverpackungen zu betrachten.

Die Lupe 3 bleibt ohne weitere Maßnahmen des Benutzers in dieser Position, wodurch der Benutzer beide Hände frei hat.

Anstatt eine Lupe 3 zu tragen kann das Halteteil 4 auch so gestaltet sein, dass es einen Trinkbecher oder einen so genannten elektronischen Einkaufsassistenten während des Einkaufes aufnehmen kann.

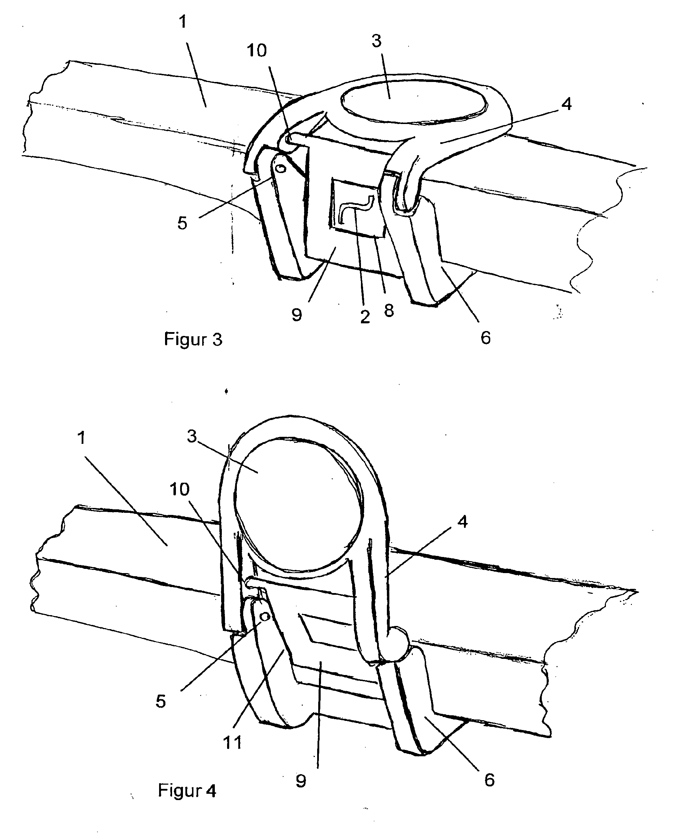

Die Figur 3 zeigt ein weiteres Ausführungsbeispiel der Erfindung. In einem Griff 1 ist ein Pfandschloss integriert. Das Pfandschloss hat eine S- förmige Schlüssel - Öffnung 2, in welche ein hier nicht gezeichneter Schlüssel einschiebbar ist. Die Lupe 3 ist in einem Halteteil 4 integriert. Das Halteteil 4 ist von einem Lager 5 drehbar gehalten.

In der gezeichneten Ausführungsform befindet sich das Lager 5 an einem Klemmteil 6. Dieses Klemmteil 6 ist mit dem Griff 1 verbunden. Da das Klemmteil 6 ein vom übrigen Pfandschloss unabhängiges Teil ist, bringt diese Lösung den Vorteil, dass ein vorhandenes Pfandschloss schnell und kostengünstig mit einer Lupe nachgerüstet werden kann, indem einzig das Klemmteil 6 am Pfandschloss angebracht wird.

Ebenso ist es natürlich möglich bereits bei der Erstmontage eines Pfandschlosses dieses mit einer Lupe zu montieren.

In der Figur 3 ist ein Schiebeteil 9 zu sehen, das eine fensterartige Ausnehmung 8 hat. Hinter der Ausnehmung 8 befindet sich die Schlüssel-Öffnung 2 des Pfandschlosses, in welche ein Schlüssel eines anderen Pfandschlosses in bekannter Weise einschiebbar ist.

Der in das Pfandschloss eingeschobene Schlüssel ist in ebenfalls bekannter Weise und von einer Haltemechanik im Inneren des Pfandschlosses gehalten, solange sich kein Pfandstück im Pfandschloss befindet. Aus Gründen der Übersichtlichkeit wurde auf die Darstellung der Haltemechanik verzichtet, da diese dem Fachmann ohnehin bekannt ist.

Das Schiebeteil 9 ist über ein Lager 10 mit dem Klemmteil 6 verbunden. Die kinematischen Verhältnisse sind so ausgelegt, dass die Öffnung 8 des Schiebeteils 9 den Zugang zur Schlüssel -Öffnung 2 nur dann freigibt, wenn die Lupe 3 auf der Oberseite des Pfandschlosses aufliegt.

Nur in dieser Position ist es möglich einen Schlüssel in die Schlüssel -Öffnung 2 einzustecken und dann das im Pfandschloss befindliche Pfandstück wieder zu entnehmen.

In der typischen Situation, wenn der Einkaufswagen zu einer Sammelstelle für Einkaufswagen in bekannter Weise zurückgebracht wird, muss der Benutzer die Lupe 3 somit zuerst in die geschützte Ruheposition bringen.

Das Bild 4 zeigt die Lupe 3 in der Leseposition. Das Halteteil 4 ist gegenüber der Ruheposition gemäß Figur 1 etwa um 90 Grad geschwenkt worden. Durch das Schwenken des Halteteils 4 hat sich auch das Lager 9 gegenüber dem Griff 1 bewegt.

Durch diese Bewegung des Lagers 10 wurde das Schiebeteil 9 etwas nach oben verschoben. Das Schiebeteil 7 ist in einer Nut 11 geführt und folgt der Bewegung des Halteteils 4. In der Leseposition der Lupe 3 ist das Einschieben eines Schlüssels nicht möglich, da sich nun die Öffnung 8 an einer anderen Stelle befindet und die Schlüssel-Öffnung 2 nun nicht mehr freigibt.

Die Lupe 3 bleibt ohne weitere Maßnahmen des Benutzers in dieser Leseposition, wodurch der Benutzer beide Hände frei hat.

Durch die vorliegende Erfindung ist es möglich, dass der Benutzer die Lupe während des Einkaufens bei Bedarf in die Leseposition bringen kann und auch wieder zurück in die Ruheposition, etwa wenn der Benutzer sperrige Gegenstände über den Griff 1 hinweg in den Korb des Einkaufswagens legen will.

Grundsätzlich ist die erfindungsgemäße Konstruktion für alle Anwendungsfälle geeignet, in denen eine Halterung für irgendein Zusatzelement während der Benutzung des Einkaufswagens zur Verfügung gestellt werden soll und diese Halterung bei einem abgestellten Einkaufswagen vor äußerer Einwirkung geschützt sein soll.

Die Erfindung ist gewerblich überall dort einsetzbar, wo dem Benutzer eines Einkaufswagens ein Zusatzelement zur Verfügung gestellt werden soll.

Funktionell lässt sich die Erfindung dergestalt beschreiben, dass eine am Einkaufswagen angebrachte Lupe nur dann aus einer geschützten Ruheposition heraus in die Leseposition verbracht werden kann, wenn kein Schlüssel im Pfandschloss steckt und der Schlüssel nur dann in das Schloss eingeschoben werden kann , wenn die Lupe die geschützte Ruheposition eingenommen hat.

## Patentansprüche

1. Einkaufswagen mit einem Halteteil (4) für ein Zusatzelement (3), wobei das Halteteil (4) am Einkaufswagen über einen Schwenkmechanismus (5) am Schiebegriff (1) des Einkaufswagens oder über einen Schwenkmechanismus (5) an einem dem Einkaufswagen zugeordneten Pfandschloss (2) befestigt ist, wobei das Halteteil (4) bei abgestellten Einkaufswagen eine Ruhestellung einnehmen kann, in welcher es geschützt am Schiebegriff (1) des Einkaufswagens oder am Gehäuse des Pfandschlosses (2) anliegt und wobei das Halteteil (4) während der Benutzung des Einkaufswagens eine Stellung einnehmen kann, in der es sich vom Schiebegriff (1) oder vom Gehäuse des Pfandschlosses (2) entfernt befindet, so dass das vom Haltemittel gehaltene Zusatzelement (3) zur Verfügung gestellt wird,
**dadurch gekennzeichnet, dass**
das Halteteil (4) von einem im Pfandschloss (2) steckenden Schlüssel (7) in der Ruhestellung fixiert wird.

2. Einkaufswagen nach Anspruch 1, **dadurch gekennzeichnet, dass** das Halteteil (4) die Ruhestellung einnimmt, wenn der Einkaufswagen in einen anderen Einkaufswagen eingeschoben ist.

3. Einkaufswagen nach Anspruch 1 oder 2, **dadurch gekennzeichnet, dass** das Halteteil (4) zuerst die Ruhestellung eingenommen haben muss bevor aus dem Pfandschloss (2) die Pfandmünze (8) entnommen werden kann.

4. Einkaufswagen nach einem der vorangegangenen Ansprüche, **dadurch gekennzeichnet, dass** ein Schlüsselgriff (7a) des im Pfandschloss (2) steckenden Schlüssels (7) das Halteteil (4) in der Ruhestellung elastisch verformt.

5. Einkaufswagen nach einem der vorangegangenen Ansprüche, **dadurch gekennzeichnet, dass** das vom Halteteil (4) gehaltene Zusatzelement (3) eine Lupe (3) ist und dass die Lupe (3) in der Ruhestellung des Haltemittels eine Ruhestellung einnimmt, in welcher sie geschützt am Schiebegriff (1) des Einkaufswagens oder am Gehäuse des Pfandschlosses (2) anliegt und in der Stellung des Haltemittels, in der es sich vom Schiebegriff (1) oder vom Gehäuse des Pfandschlosses (2) entfernt befindet, eine Leseposition einnimmt, in welcher sie sich vom Schiebegriff (1) oder vom Gehäuse des Pfandschlosses (2) entfernt befindet und in welcher eine bequeme Durchsicht möglich ist.

6. Einkaufswagen nach Anspruch 5, **dadurch gekennzeichnet, dass** die Lupe (3) in das Halteteil (4) integriert ist.

7. Einkaufswagen nach einem der Ansprüche 4 oder 5, **dadurch gekennzeichnet, dass** das Pfandschloss (2) eine Vertiefung aufweist, in welcher das Halteteil (4) und die Lupe (3) geschützt sind.

8. Einkaufswagen nach einem der vorangegangenen Ansprüche, **dadurch gekennzeichnet, dass** ein Schiebeteil (9) vorgesehen ist, durch welches die zum Einschieben des Schlüssels vorgesehene Öffnung (2) des Pfandschlosses verdeckbar ist.

9. Einkaufswagen nach Anspruch 8, **dadurch gekennzeichnet, dass** das Schiebeteil (9) die zum Einschieben des Schlüssels vorgesehene Öffnung (2) des Pfandschlosses verdeckt, wenn das Halteteil (4) die Stellung einnimmt, in der es sich vom Schiebegriff (1) oder vom Gehäuse des Pfandschlosses (2) entfernt befindet, so dass das vom Haltemittel gehaltene Zusatzelement (3) zur Verfügung gestellt wird, und das Schiebeteil (9) die zum Einschieben des Schlüssels vorgesehene Öffnung (2) des Pfandschlosses freigibt, wenn das Halteteil (4) die Ruheposition eingenommen hat.

## Claims

1. A shopping trolley with a holding part (4) for an additional element (3), wherein the holding part (4) is fastened to the shopping trolley via a pivot mechanism (5) on the pushing handle (1) of the shopping trolley or via a pivot mechanism (5) to a deposit lock (2) assigned to the shopping trolley, wherein the holding part (4) can assume a rest position in which it contacts the pushing handle (1) of the shopping trolley or the housing of the deposit lock (2) in a protected manner and wherein the holding part (4) can assume a position in which it is located distant from the pushing handle (1) or from the housing of the deposit lock (2), so that the additional element (3) held by the holding part (4) is made available,
**characterized in that**
the holding part (4) is fixed in the rest position by a key (7) which is inserted in the deposit lock (2).

2. A shopping trolley according to claim 1, **characterized in that** the holding part (4) assumes the rest position when the shopping trolley is pushed into another shopping trolley.

3. The shopping trolley according to claim 1 or 2, **characterized in that** the holding part (4) must have first assumed the rest position before the deposit coin (8) can be removed from the deposit lock (2).

4. The shopping trolley according to one of the preceding claims, **characterized in that** the holding part (4) in its rest position is elastically deformed by a key handle (7a) when the key (7) is in the deposit lock (2).

5. The shopping trolley according to one of the preceding claims, **characterized in that** the additional element (3) hold by the holding part (4) is a magnifying glass (3), wherein the magnifying glass (3) can assume a rest position in which it contacts the pushing handle (1) of the shopping trolley or the housing of the deposit lock (2) in a protected manner and can assume a reading position in which it is located distant from the pushing handle (1) or from the housing of the deposit lock (2) and in which a comfortable perusal is possible.

6. The shopping trolley according to claim 5, **characterized in that** the magnifying glass (3) is integrated in the holding part (4).

7. The shopping trolley according to claim 5 or 6, **characterized in that** the deposit lock (2) comprises a depression in which the holding part (4) and the magnifying glass (3) are accommodated in a protected manner.

8. The shopping trolley according to one of the preceding claims, **characterized in that** a sliding part (9) is provided, through which the opening (2) of the deposit lock provided for inserting the key can be covered.

9. The shopping trolley according to claim 8, **characterized in that** the sliding part (9) covers the opening (2) of the deposit lock provided for inserting the key, when the holding part (4) has assumed a position in which it is located distant from the pushing handle (1) or from the housing of the deposit lock (2) and the additional element (3) held by the holding part (4) is available, and the sliding part (9) exposes the opening (2) of the deposit lock provided for inserting the key, when the holding part (4) has assumed a rest position.

## Revendications

1. Chariot à emplettes avec une pièce de maintien (4) pour un élément supplémentaire (3), la pièce de maintien (4) étant fixée sur le chariot à emplettes par l'intermédiaire d'un mécanisme pivotant (5) sur le poignée de manoeuvre (1) du chariot à emplettes ou par l'intermédiaire d'un mécanisme pivotant (5) sur une serrure à consigne (2) associée au chariot à emplettes, lorsque le chariot à emplettes est rangé, la pièce de maintien (4) pouvant adopter une position de repos, dans laquelle elle est adjacente en étant protégée à la poignée de manoeuvre (1) du chariot à emplettes ou au boîtier de la serrure à consigne (2) et pendant l'utilisation du chariot à emplettes, la pièce de maintien (4) pouvant adopter une position dans laquelle elle est éloignée de la poignée de manoeuvre (1) ou du boîtier de la serrure à consigne (2), de sorte à mettre à disposition l'élément supplémentaire (3) maintenu par le moyen de maintien,
**caractérisé en ce que**
la pièce de maintien (4) est fixée en position de repos par une clé (7) insérée dans la serrure à consigne (2).

2. Chariot à emplettes selon la revendication 1, **caractérisé en ce que** la pièce de maintien (4) adopte la position de repos lorsqu'on emboîte le chariot à emplettes dans un autre chariot à emplettes.

3. Chariot à emplettes selon la revendication 1 ou la revendication 2, **caractérisé en ce que** la pièce de maintien (4) doit avoir d'abord adopté la position de repos, avant de pouvoir retirer la pièce de monnaie (8) de la serrure de consigne (2).

4. Chariot à emplettes selon l'une quelconque des revendications précédentes, **caractérisé en ce qu'**une tête de clé (7a) de la clé (7) insérée dans la serrure à consigne (2) déforme élastiquement la pièce de maintien (4) dans la position de repos.

5. Chariot à emplettes selon l'une quelconque des revendications précédentes, **caractérisé en ce que** l'élément supplémentaire (3) maintenu par la pièce de maintien (4) est une loupe (3) et **en ce que** dans la position de repos du moyen de maintien, la loupe (3) adopte une position de repos, dans laquelle elle est adjacente en étant protégée à la poignée de manoeuvre (1) du chariot à emplettes ou au boîtier de la serrure à consigne (2) et dans la position de la pièce de maintien dans laquelle elle est éloignée de la poignée de manoeuvre (1) ou du boîtier de la serrure à consigne (2), elle adopte une position de lecture dans laquelle est éloignée de la poignée de manoeuvre (1) ou du boîtier de la serrure à consigne (2) et dans laquelle une vue en transparence confortable est possible.

6. Chariot à emplettes selon la revendication 5, **caractérisé en ce que** la loupe (3) est intégrée dans la pièce de maintien (4).

7. Chariot à emplettes selon l'une quelconque des revendications 5 ou 6, **caractérisé en ce que** la serrure à consigne (2) comporte un creux dans lequel la pièce de maintien (4) et la loupe (3) sont protégés.

8. Chariot à emplettes selon l'une quelconque des revendications précédentes, **caractérisé en ce qu'**il est prévu une pièce coulissante (9) laquelle peut recouvrir l'orifice (2) prévu pour insérer la clé de la serrure à consigne.

9. Chariot à emplettes selon la revendication 8, **caractérisé en ce que** la pièce coulissante (9) recouvre l'orifice (2) prévu pour insérer la clé de la serrure de consigne lorsque que la pièce de maintien (4) adopte la position dans laquelle elle est éloignée de la poignée de manoeuvre (1) ou du boîtier de la serrure à consigne (2), de sorte que l'élément supplémentaire (3) maintenu par le moyen de maintien soit mis à disposition et que la pièce coulissante (9) libère l'orifice (2) prévu pour insérer la clé de la serrure de consigne lorsque la pièce de maintien (4) a adopté la position de repos.
